# EUROPEAN PATENT SPECIFICATION

(11) **EP 2 848 725 B1**
(45) Date of publication and mention of the grant of the patent: **01.11.2017**
(21) Application number: 14184287.2
(22) Date of filing: 10.09.2014
(51) Int. Cl.: D06F 37/22

(54) **Balancer for a washing machine**
Auswuchtvorrichtung für eine Waschmaschine
Compensateur destiné à une machine à laver

(30) Priority: 11.09.2013 KR 20130109028
(43) Date of publication of application: 18.03.2015
(73) Proprietor: Samsung Electronics Co., Ltd., Gyeonggi-do 16677 (KR)
(72) Inventor: Kim, Min Sung, Gyeonggi-do (KR); Jung, Dong Ha, Gyeonggi-do (KR); Kang, Jeong Hoon, Seoul (KR)
(74) Representative: Walaski, Jan Filip

(56) References cited:
- EP-A1- 2 604 736
- EP-A2- 0 811 717
- EP-A2- 2 441 872
- WO-A1-2005/075726

## Description

The present invention relates to a balancer for a washing machine for offsetting an unbalanced load caused during rotation of a drum.

A washing machine is an apparatus configured to wash clothes using electricity, and generally includes a cabinet defining an external appearance of the washing machine, a tub to store wash water inside the cabinet, a drum rotatably installed inside the tub, and a motor to rotatably drive the drum.

When the drum is rotated by the motor in a state in which laundry and wash water are accommodated into the drum, the laundry rubs against the drum and the wash water so as to allow stains on the laundry to be eliminated.

If laundry is concentrated at a particular part in the drum without being evenly distributed therein during rotation of the drum, vibration and noise are generated due to eccentric rotation of the drum, and components such as the drum and the motor may even be damaged.

Accordingly, the washing machine includes a balancer to stabilize rotation of the drum by offsetting an unbalanced load caused within the drum.

EP2441872 relates to a washing machine including mass body which can be controlled by an electromagnet so that unbalanced loads can be offset by the mass body.

EP0811717 relates to a washing machine including a balancer which includes retaining stations for retaining balancing balls while a drum is rotating below a predetermined speed.

Therefore, it is an aspect of the present invention to provide a balancer of a washing machine having improved balancing performance.

Additional aspects of the invention will be set forth in part in the description which follows and, in part, will be obvious from the description, or may be learned by practice of the invention. According to the invention, there is provided a balancer for a washing machine according to claim 1.

The balancer housing may include a first housing opened at one side thereof, and a second housing covering the first housing to form the annular channel.

The at least one guide groove includes a first guide groove that may be formed on an inner surface of the first housing.

The at least one guide groove includes a second guide groove that may be formed on an inner surface of the second housing.

A radial distance between a first line, which is parallel with an axis of rotation of the drum and passes through a center of the first guide groove, and the axis of rotation of the drum may be greater than a radial distance between a second line, which is parallel with the axis of rotation of the drum and passes through a center of the second guide groove, and the axis of rotation of the drum.

The first guide groove may be formed along a circumferential direction of the balancer housing.

The second guide groove may be formed along a circumferential direction of the balancer housing.

The first and second guide grooves may be arranged to face each other.

These and/or other aspects of the invention will become apparent and more readily appreciated from the following description of the embodiments, taken in conjunction with the accompanying drawings of which:
FIG. 1 is a view illustrating a configuration of a washing machine according to an embodiment of the present invention;
FIG. 2 is an exploded perspective view of a drum and a balancer according to an embodiment of the present invention;
FIG. 3 is an enlarged view of portion "A" in FIG. 1;
FIG. 4 is a perspective view illustrating the balancer according to the embodiment of the present invention;
FIG. 5 is an exploded perspective view of the balancer shown in FIG. 4;
FIG. 6 is an exploded perspective view of the balancer in FIG. 5 when viewed from another angle;
FIG. 7 is an enlarged view of portion "C" in FIG. 6;
FIG. 8 is an enlarged view of portion "B" in FIG. 5;
FIG. 9 is a front view of FIG. 8;
FIG. 10 is an enlarged view illustrating an inclined sidewall;
FIG. 11 is a cross-sectional view taken along line I-I in FIG. 4;
FIG. 12 is a cross-sectional view taken along line III-III in FIG. 4;
FIG. 13 is a cross-sectional view taken along line II-II in FIG. 8;
FIG. 14 is a view for explaining a relationship between centrifugal force, magnetic force, and support force by the inclined sidewall;
FIG. 15 is a view illustrating a structure in which magnets are arranged on a balancer housing;
FIGS. 16 and 17 are views illustrating an operation principle of the balancer according to the embodiment of the present invention; and
FIGS. 18a-c show a plurality of masses in various stages of movement relative to a channel.

Reference will now be made in detail to the embodiments of the present invention, examples of which are illustrated in the accompanying drawings, wherein like reference numerals refer to like elements throughout.

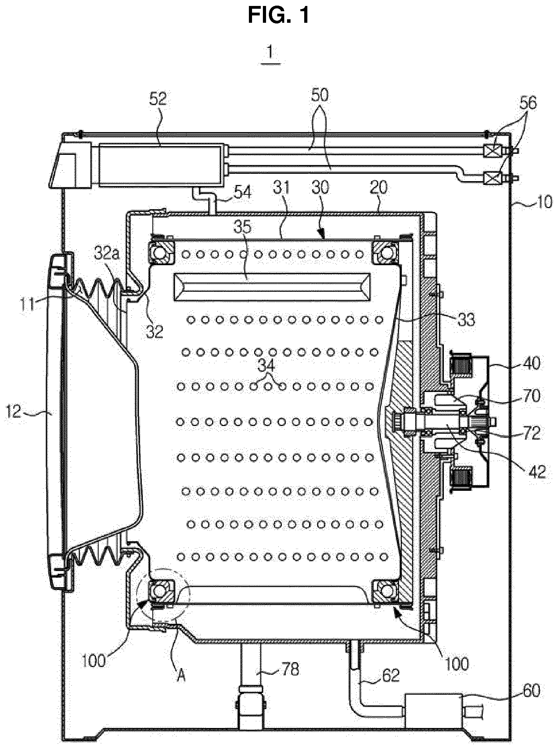

FIG. 1 is a view illustrating a configuration of a washing machine according to an embodiment of the present invention.

As shown in FIG. 1, a washing machine 1 includes a cabinet 10 defining an external appearance thereof, a tub 20 arranged within the cabinet 10, a drum 30 rotatably arranged within the tub 20, and a motor 40 to drive the drum 30.

The cabinet 10 is formed, at a front surface portion thereof, with an opening 11 through which laundry may be inserted into the drum 30. The opening 11 is opened and closed by a door 12 mounted to the front surface portion of the cabinet 10.

The tub 20 is equipped, at an upper portion thereof, with water supply tubes 50 to supply wash water to the tub 20. Each of the water supply tubes 50 is connected, at one side thereof, with a water supply valve 56 and the other sides of the water supply tubes 50 are connected with a detergent supply unit 52.

The detergent supply unit 52 is connected to the tub 20 through a connection tube 54. Water supplied through the water supply tubes 50 is supplied into the tub 20 together with detergent via the detergent supply unit 52.

The tub 20 is equipped, at a lower portion thereof, with a drainage pump 60 and a drainage tube 62 to discharge water within the tub 20 to the outside of the cabinet 10.

The drum 30 includes a cylindrical portion 31, a front wall 32 disposed in the front of the cylindrical portion 31, and a rear wall 33 disposed in the rear of the cylindrical portion 31. The front wall 32 is formed with an opening 32a for insertion of laundry, and the rear wall 33 is connected to a drive shaft 42 to which the motor 40 transmits power.

A plurality of through holes 34, through which wash water passes, is formed around the drum 30, and a plurality of lifters 35 is installed on an inner peripheral surface of the drum 30 so that laundry may be tumbled during rotation of the drum 30.

The drive shaft 42 is disposed between the drum 30 and the motor 40. One end of the drive shaft 42 is connected to the rear wall 33 of the drum 30, and the other end of the drive shaft 42 extends outward of a rear wall of the tub 20. When the motor 40 drives the drive shaft 42, the drum 30 connected to the drive shaft 42 rotates about the drive shaft 42.

The rear wall of the tub 20 is provided with a bearing housing 70 to rotatably support the drive shaft 42. The bearing housing 70 may be made of an aluminum alloy, and be inserted into the rear wall of the tub 20 during injection molding of the tub 20. Bearings 72 are installed between the bearing housing 70 and the drive shaft 42 so that the drive shaft 42 may be smoothly rotated.

The tub 20 is supported by a damper 78. The damper 78 connects an inside bottom surface of the cabinet 10 to an outer surface of the tub 20.

During a washing operation, the motor 40 rotates the drum 30 at low speed in forward and reverse directions, and thus stains on laundry are eliminated while the laundry within the drum 30 is continuously tumbled.

During a dehydration operation, when the motor 40 rotates the drum 30 at high speed in one direction, water is separated from laundry by centrifugal force acting on the laundry.

In the process of dehydration, when laundry is concentrated at a particular part in the drum 30 without being evenly distributed therein during rotation of the drum 30, the drum 30 unstably rotates, resulting in vibration and noise.

Accordingly, the washing machine 1 includes a balancer 100 to stabilize rotational motion of the drum 30.

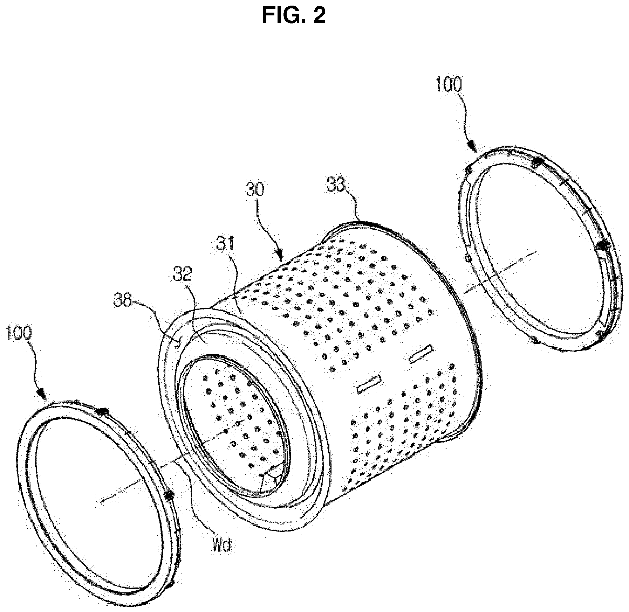

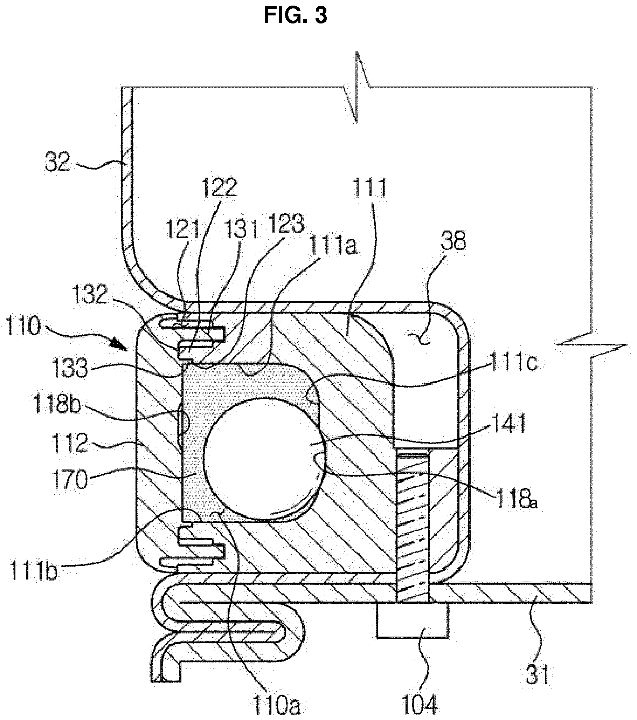

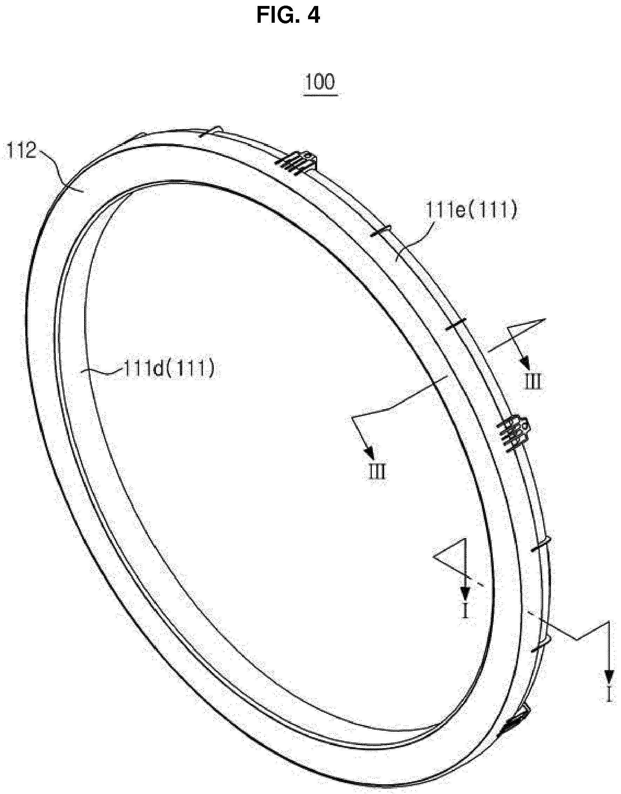

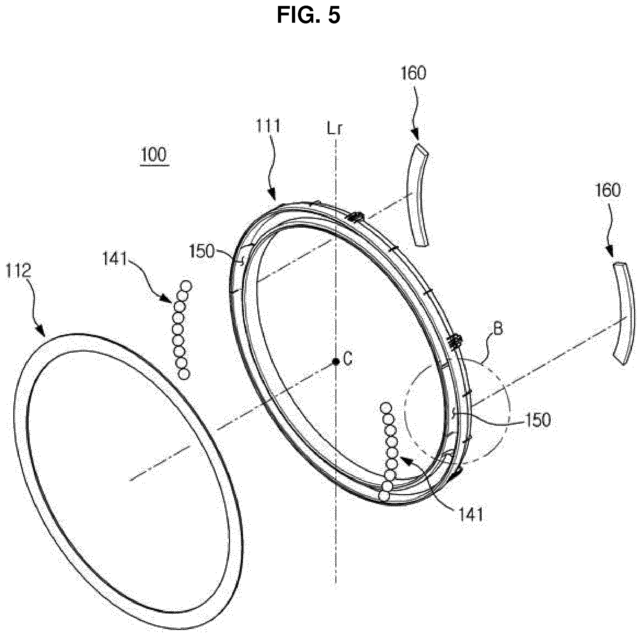

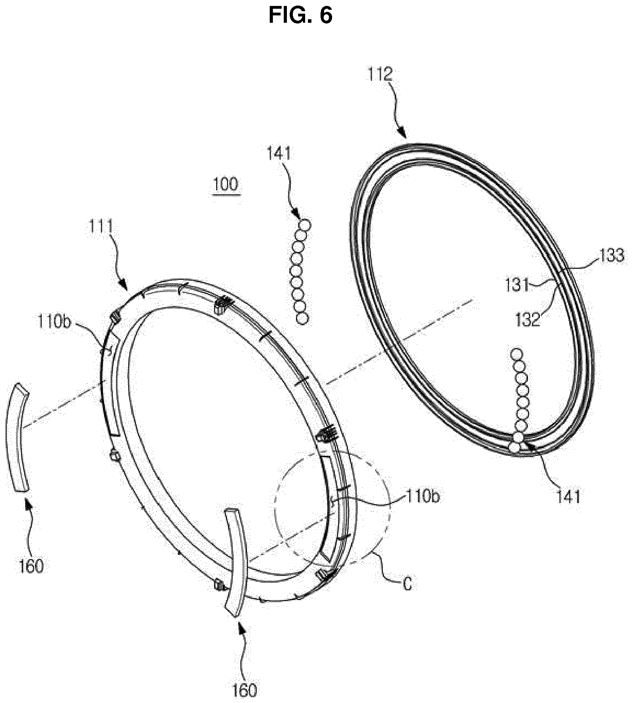

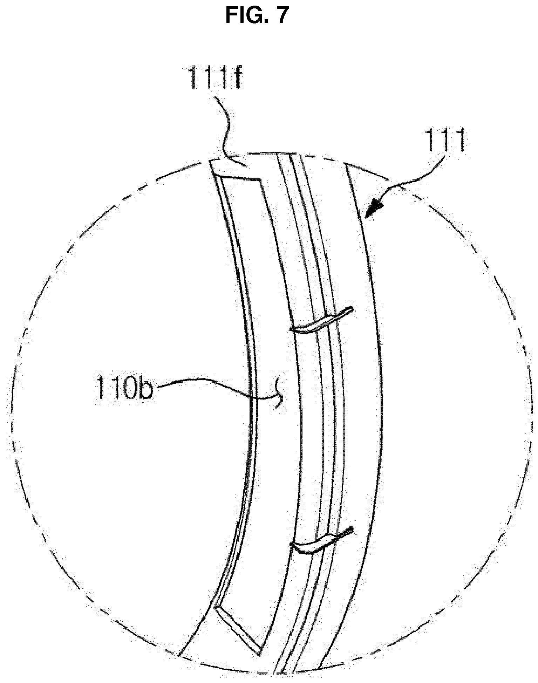

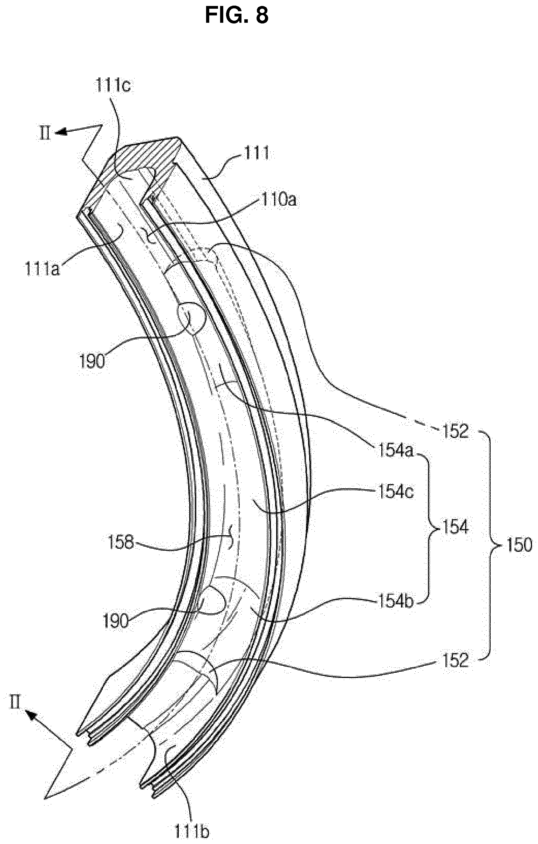

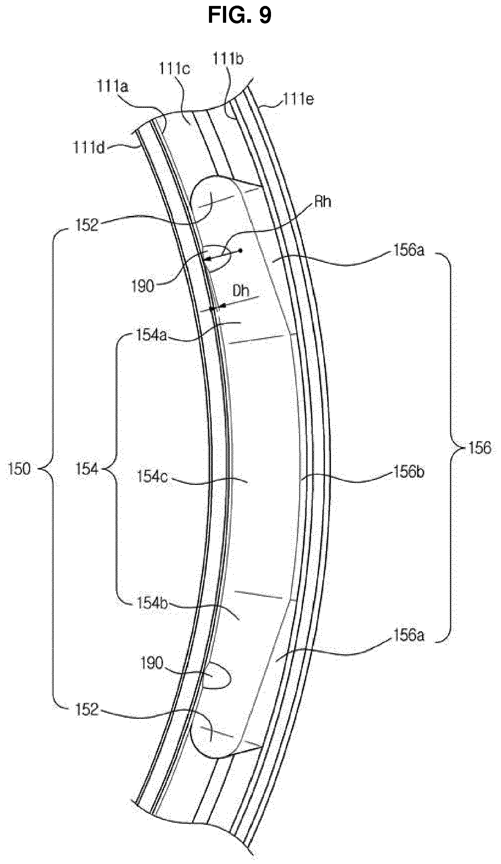

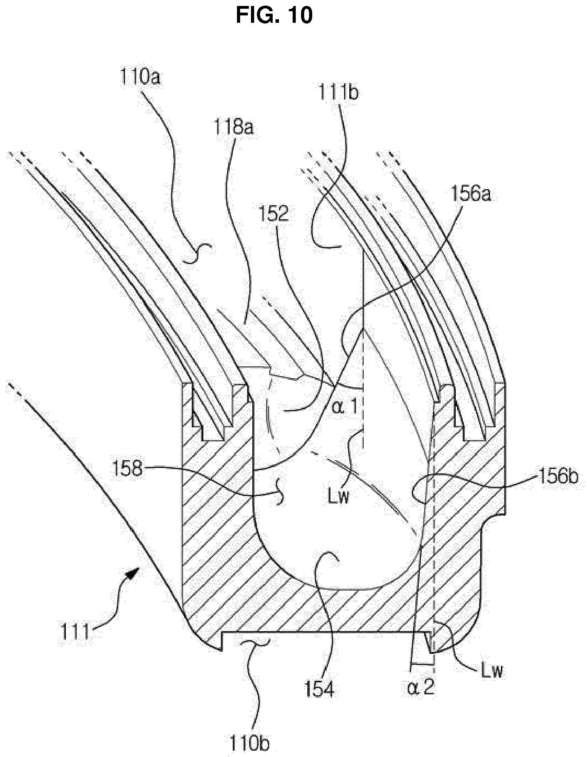

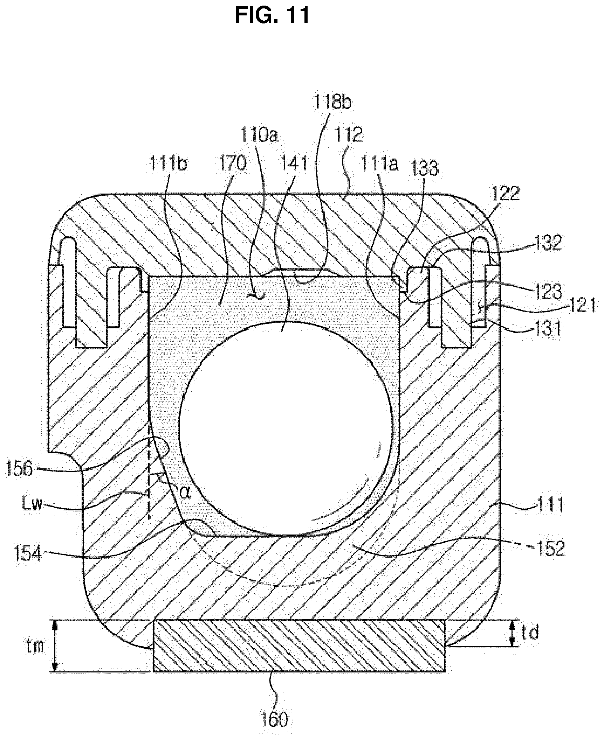

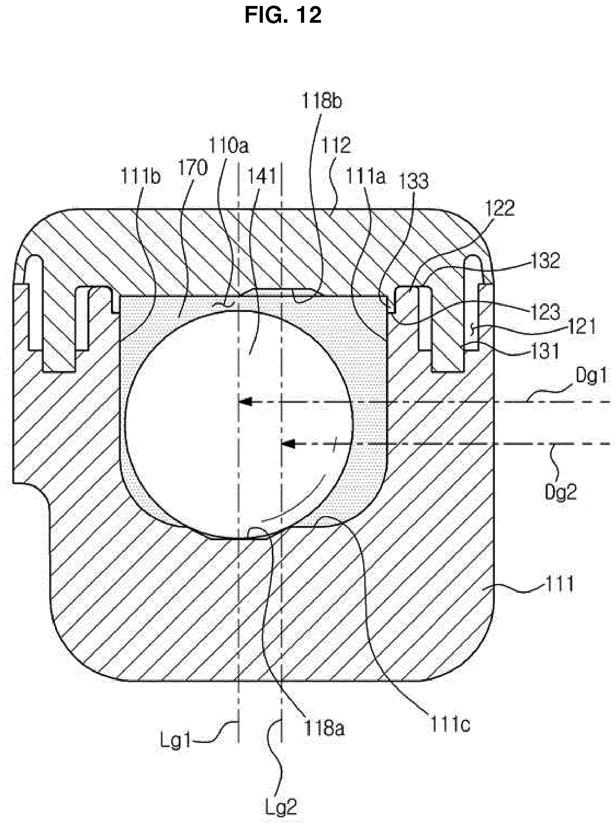

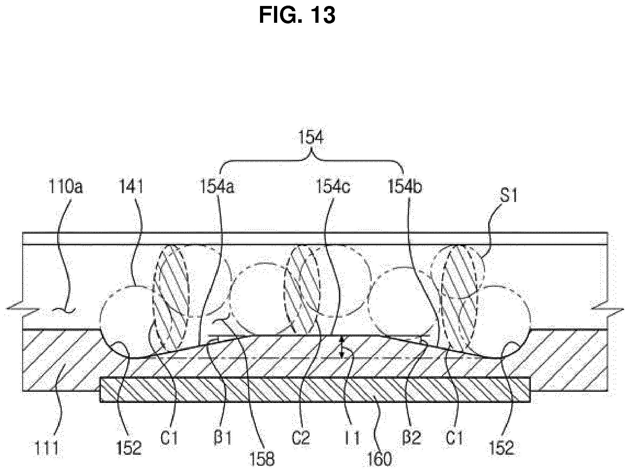

FIG. 2 is an exploded perspective view of the drum and the balancer according to an embodiment of the present invention. FIG. 3 is an enlarged view of portion "A" in FIG. 1. FIG. 4 is a perspective view illustrating the balancer according to an embodiment of the present invention. FIG. 5 is an exploded perspective view of the balancer shown in FIG. 4. FIG. 6 is an exploded perspective view of the balancer in FIG. 5 when viewed from another angle. FIG. 7 is an enlarged view of portion "C" in FIG. 6. FIG. 8 is an enlarged view of portion "B" in FIG. 5. FIG. 9 is a front view of FIG. 8. FIG. 10 is an enlarged view illustrating an inclined sidewall. FIG. 11 is a cross-sectional view taken along line I-I in FIG. 4. FIG. 12 is a cross-sectional view taken along line III-III in FIG. 4. FIG. 13 is a cross-sectional view taken along line II-II in FIG. 8. FIG. 11 is a cross-sectional view illustrating a section in which a groove is formed. FIG. 12 is a cross-sectional view illustrating a section in which a groove is not formed.

The balancer 100 may be mounted to at least one of the front wall 32 and the rear wall 33 of the drum 30. Since the balancers 100 mounted to the front wall 32 and the rear surface plate 33 are equal to each other, a description will be given on the basis of the balancer 100 mounted to the front surface plate 32 below.

As shown in FIGS. 1 to 13, the balancer 100 includes a balancer housing 110 having an annular channel 110a, and a plurality of masses 141 arranged in the annular channel 110a and performing a balancing function of the drum 30 while moving along the annular channel 110a.

The front wall 32 of the drum 30 is formed with an annular recess 38 opened at the front thereof, and the balancer housing 110 is accommodated in the recess 38. The balancer housing 110 may be coupled to the drum 30 through a fixing member 104 so as to be securely fixed to the drum 30.

The balancer housing 110 includes an annular first housing 111 opened at one side thereof, and a second housing 112 to cover the open portion of the first housing 111. The annular channel 110a is defined by an inner surface of the first housing 111 and an inner surface of the second housing 112. The first and second housings 111 and 112 may be made of a plastic material such as PP (polypropylene) or an ABS (acrylonitrile butadiene styrene) resin by injection molding, and may be coupled to each other via thermal bonding. Hereinafter, a front surface of the balancer housing 110 is defined as a surface exposed to the front thereof when the balancer housing 110 is coupled to the drum 30, a rear surface of the balancer housing 110 is defined as a surface which is opposite the front surface of the balancer housing 110 and faces the front surface plate 32 of the drum 30 when the balancer housing 110 is coupled to the drum 30, and a side surface of the balancer housing 110 is defined as a surface which connects the front and rear surfaces of the balancer housing 110.

The first housing 111 has first coupling grooves 121 formed at both sides of the channel 110a, and the second housing 112 has a first coupling protrusion 131 coupled to each of the first coupling grooves 121. A second coupling protrusion 122 is formed between the first coupling groove 121 of the first housing 111 and the channel 110a. The second coupling protrusion 122 of the first housing 111 is coupled to a second coupling groove 132 formed at an inner side of the first coupling protrusion 131 of the second housing 112. A third coupling groove 123 is formed on an inside surface of the second coupling protrusion 122 adjacent to the channel 110a, and the second housing 112 has a third coupling protrusion 133 coupled to the third coupling groove 123. According to such a coupling structure, the first housing 111 may be securely coupled to the second housing 112, and when a fluid such as oil is accommodated into the channel 110a, it may be possible to prevent leakage of the fluid.

The first housing 111 includes first and second inner surfaces 111a and 111b facing each other, and a third inner surface 111c connecting the first and second inner surfaces 111a and 111b. The first inner surface 111a is a surface corresponding to an inner peripheral surface 111d of the first housing 111, and the second inner surface 111b is a surface corresponding to an outer peripheral surface me of the first housing 111.

Grooves 150, on which the plural masses 141 are seated to temporarily restrict the masses 141, are formed on at least one of the first, second, and third inner surfaces 111a, 111b, and 111c. Although FIGS. 8 and 9 show a state in which one groove 150 is formed across the first and third inner surfaces 111a and 111c, the present invention is not limited thereto. For example, the groove 150 may also be formed on at least one of the first, second, and third inner surfaces 111a, 111b, and 111c, formed across the first and third inner surfaces 111a and 111c, or formed across all of the first, second, and third inner surfaces 111a, 111b, and 111c.

The grooves 150 may be symmetrically arranged on the basis of an imaginary line Lr which passes through a center of rotation of the drum 30 and is perpendicular to the ground so as not to cause an unbalanced load on the drum 30 due to the masses 141 in a state in which the masses 141 are seated on and received in the grooves 150.

As shown particularly in FIG. 13, each of the grooves 150 is elongated in a circumferential direction of the balancer housing 110 so as to receive at least two masses 141. The groove 150 includes first support portions 152 to support the masses 141 in the substantially circumferential and radial directions of the balancer housing 110, a second support portion 154 provided between the first support portions 152 to support the masses 141 in the substantially radial direction of the balancer housing 110, inclined surfaces 154a and 154b which are obliquely formed inward of the channel 110a of the balancer housing 110, and at least one flat surface 154c provided between the inclined surfaces 154a and 154b.

The first support portions 152 are provided in a stepped shape at both ends of the groove 150 in order to prevent decoupling of the masses 141 from the groove 150 when an RPM (ie. rotational speed) of the drum 30 is within a specific RPM (rotational speed) range.

The second support portion 154 is provided in a shape protruding inward of the channel 110a, and the inclined surfaces 154a and 154b and the flat surface 154c are provided in the second support portion 154. The inclined surfaces 154a and 154b include a first inclined surface 154a and a second inclined surface 154b with the flat surface 154c being interposed therebetween, and both ends of each of the first and second inclined surfaces 154a and 154b are respectively connected with each first support portion 152 and the flat surface 154c. A first inclined angle β1 defined by the flat surface 154c and the first inclined surface 154a may differ from a second inclined angle β2 defined by the flat surface 154c and the second inclined surface 154b. The second support portion 154 may have a length l1 between 1 mm and 3 mm protruding inward of the channel.

The channel 110a includes a cross-section increasing portion 158 having an increased cross-section at a section formed with the groove 150. The cross-section increasing portion 158 is a space formed in the channel 110a by the groove 150. The cross-section increasing portion 158 may be provided in a shape corresponding to at least a portion of the masses 141, and be elongated in the circumferential direction of the balancer housing 110 so as to receive at least two masses 141 similarly to the groove 150. In addition, the cross-section increasing portions 158 may be symmetrically arranged on the basis of the imaginary line Lr passing through the center of rotation of the drum 30.

Due to the first inclined surface 154a, the second inclined surface 154b, and the flat surface 154c provided in the second support portion 154, each cross-sectional area C1 of both ends of the cross-section increasing portion 158 is greater than a cross-sectional area C2 between both ends of the cross-section increasing portion 158.

The second support portion 154 is provided in a shape protruding inward of the channel 110a, and therefore a clearance S1 is generated between the masses 141 received within the groove 150 or the cross-section increasing portion 158. Accordingly, since the masses 141 are smoothly decoupled from the groove 150 without being fixed to the groove 150 when the RPM of the drum 30 departs from a specific RPM range, a balancing function of the drum 30 may be performed while the masses 141 move along the channel 110a.

As shown in FIGS. 8 and 9, the balancer housing 110 is provided therein with a plurality of anti-decoupling grooves 190.

The anti-decoupling grooves 190 may be formed across a portion of the groove 150 and the first inner surfaces 111a connected to the groove 150 or be provided in a pair at positions adjacent to the first support portions 152 of the groove 150.

A portion of each anti-decoupling groove 190 is provided in an arc shape. The anti-decoupling groove 190 may have a radius Rh equal to or more than that of the mass 141. In addition, the anti-decoupling groove 190 may have a depth Dh formed approximately between 1 mm and 2 mm from the first inner surface 111a.

The anti-decoupling groove 190 serves to prevent the masses 141 received in the groove 150 from being decoupled from the groove 150 at the initial stage of dehydration.

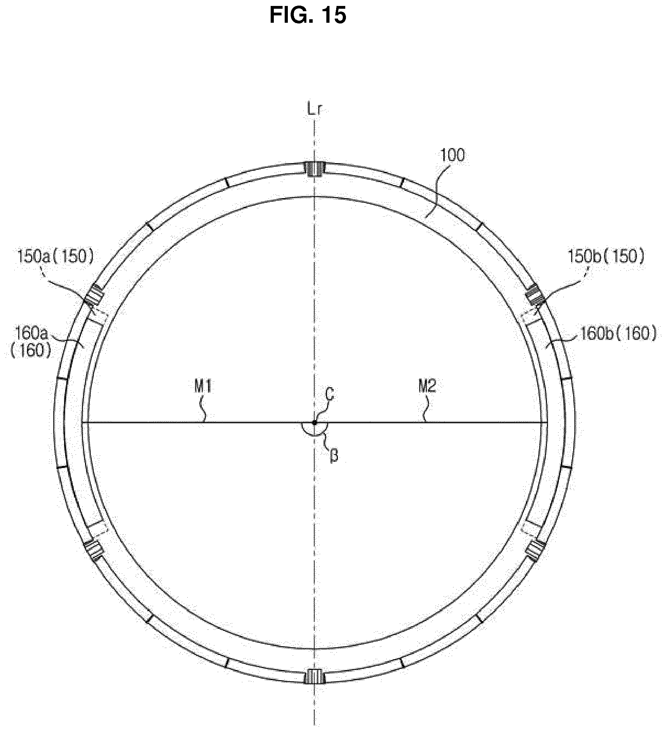

Before dehydration begins, i.e., before the drum 30 begins to rotate, the masses 141 are arranged at the bottom of the balancer housing 110 by weight thereof. In such a state, when the drum 30 rotates at low speed at the initial stage of dehydration, the masses 141 move along the channel 110a of the balancer housing 110 by centrifugal force, and are received in and seated on the groove 150 in the process of moving along the channel 110a of the balancer housing 110 (see FIGS. 15 to 17). In this case, the same number of masses 141 has to be evenly distributed in a pair of grooves 150a and 150b, respectively (see FIGS. 15 to 17).

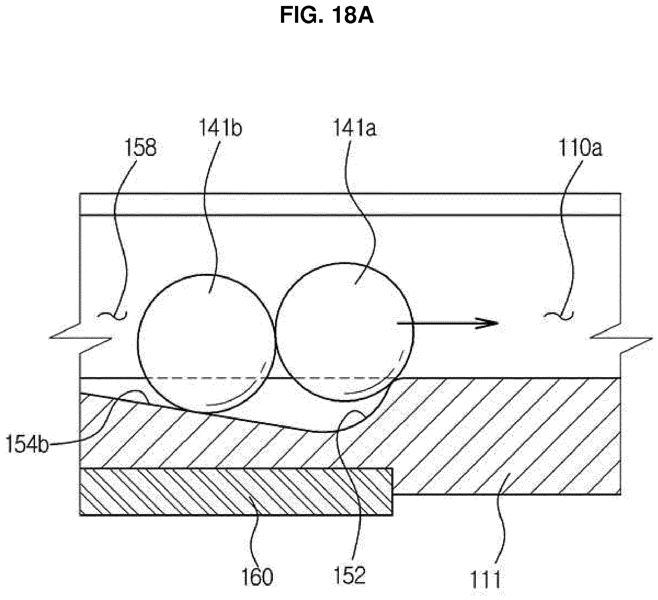

As shown in FIG. 18A, in the process in which the masses 141 are received in the groove 150, a mass 141a (hereinafter, referred to as "outermost mass") disposed at the outermost portion of the groove 150 may be arranged in a posture where the outermost mass 141a is not instantaneously and fully received in the groove 150 and is slightly laid on another adjacent mass 141b (hereinafter, referred to as "adjacent mass") and the first support portion 152 within the groove 150. In this case, magnetic force of a magnet 160 acting on the outermost mass 141a is weak and support force to support the outermost mass 141a by the first support portion 152 is weak. Therefore, the outermost mass 141a may be decoupled from the groove 150 without being received therein by centrifugal force due to accelerated rotation of the drum 30.

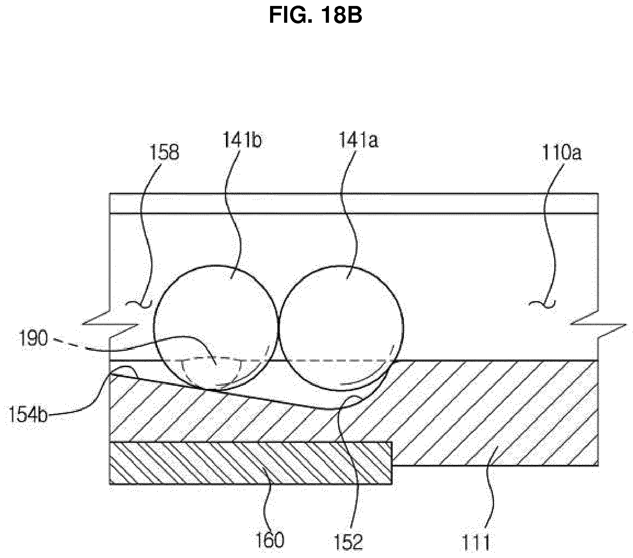

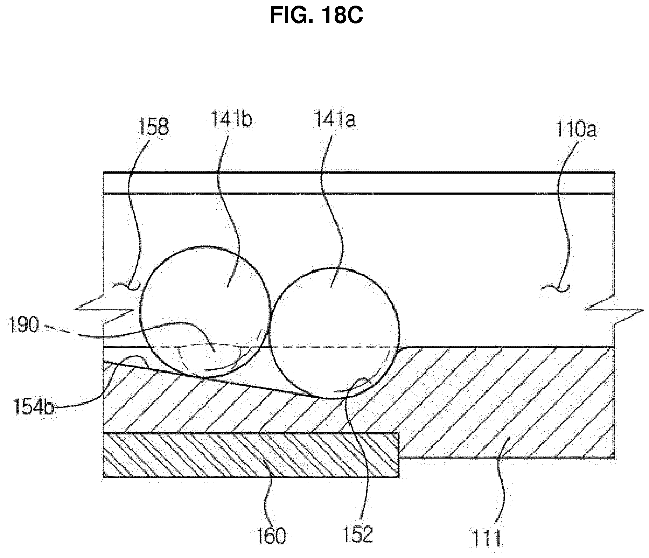

As shown in FIG. 18B, in the process in which the masses 141 are received in the groove 150 at the initial stage of dehydration, the anti-decoupling groove 190 temporarily receives the adjacent mass 141b and enables the outermost mass 141a to be supported between the first support portion 152 and the adjacent mass 141b. Consequently, the anti-decoupling groove 190 prevents the outermost mass 141a from being decoupled from the groove 150 by centrifugal force due to accelerated rotation of the drum 30. As shown in FIG. 18C, when the drum 30 is further accelerated, the outermost mass 141a is fully seated on and received in the groove 150 by pushing out the adjacent mass 141b from the anti-decoupling groove 190.

A rear surface 111f of the first housing 111 corresponding to the inner surface thereof formed with the groove 150 is provided with a magnet receiving groove 110b to receive and couple the magnet 160. The magnet receiving groove 110b may be provided in a shape corresponding to the magnet 160 such that the magnet 160 is coupled to the magnet receiving groove 110b. A depth td of the magnet receiving groove 110b may be equal to or less than a thickness tm of the magnet 160.

The magnet 160 is formed in an arc shape, and restricts the masses 141 such that no mass 141, which is coupled to the magnet receiving groove 110b and received in the groove 150, is decoupled from the groove 150.

The magnet 160 may be fixed to the magnet receiving groove 110b using an adhesive (not shown) and the like. After a worker applies an adhesive to the magnet receiving groove 110b, the magnet 160 may be inserted into and fixed to the magnet receiving groove 110b.

The magnet 160 is not limited to being coupled to the rear surface of the balancer housing 110. For example, the magnet 160 may also be coupled to the front surface of the balancer housing 110 or the side surface connecting the front and rear surfaces of the balancer housing 110.

The magnet 160 restricts the masses 141 using magnetic force, and an intensity of magnetic force of the magnet 160 is determined depending upon an RPM of the drum 30 when the masses 141 are decoupled from the groove 150. For instance, in order for the RPM of the drum 30 to become 200 RPM when the masses 141 are decoupled from the groove 150, the intensity of magnetic force of the magnet 160 may be adjusted in such a manner that the masses 141 are restricted so that no mass 141 received in the groove 150 is decoupled from the groove 50 when the RPM of the drum 30 is from 0 to 200 RPM, and the masses 141 are decoupled from the groove 150 when the RPM of the drum 30 exceeds 200 RPM. The intensity of magnetic force of the magnet 160 may be adjusted to a desired intensity by the size of the magnet 160, the number of the magnets 160, the magnetization method of the magnets 160, or the like.

An inclined sidewall 156 is provided on the second inner surface 111b corresponding to the first inner surface 111a.

The inclined sidewall 156 is configured of at least a portion of the second inner surface 111b connecting with groove 150. The inclined sidewall 156 forms an inclined angle α with an imaginary line Lw alongside of an axis Wd of rotation of the drum 30, and supports the masses 141 received in the groove 150 when the drum 30 rotates.

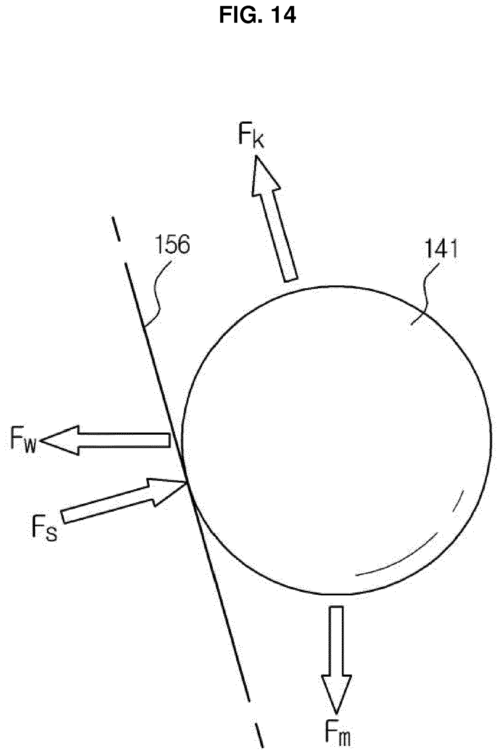

As shown in FIG. 14, the inclined sidewall 156 generates support force Fs to support each mass 141 in a direction against centrifugal force Fw applied to the mass 141 when the drum 30 rotates.

The centrifugal force Fw applied to the mass 141 when the drum 30 rotates is offset by the support force Fs applied to the mass 141 by the inclined sidewall 156. Accordingly, magnetic force Fm generated by the magnet 160 coupled to the rear surface of the balancer housing 110 offsets only force remaining after being offset by the support force Fs applied to the mass 141 by the inclined sidewall 156 in the centrifugal force Fw of the mass 141, namely force Fk formed along the inclined sidewall 156, and thereby may restrict movement of the mass 141 when the RPM of the drum is within a specific RPM range.

As described above, by forming the inclined sidewall 156 on the second inner surface 111b corresponding to the first inner surface 111a and offsetting the centrifugal force Fw applied to the mass 141 during rotation of the drum 30 through the inclined sidewall 156, it may be possible to efficiently restrict and control movement of the mass 141 using only the magnetic force Fm of small intensity.

The inclined angle α of the inclined sidewall 156 may be from about 5° to about 25°. The inclined angle α of the inclined sidewall 156 may be changed along the circumferential direction of the second inner surface 111b. The inclined angle α of the inclined sidewall 156 may also continuously increase or decrease along the circumferential direction of the second inner surface 111b.

As shown in FIG. 10, the inclined sidewall 156 includes first and second sections 156a and 156b having different inclined angles α1 and α2. The first sections 156a are arranged at positions corresponding to the first and second inclined surfaces 154a and 154b, and the second section 156b is arranged between the first sections 156a, namely at a position corresponding to the flat surface 154c of the groove 150. The inclined angle α1 of the inclined sidewall 156 in each first section 156a of the inclined sidewall 156 may be maintained at 25°, and the inclined angle α2 of the inclined sidewall 156 in the second section 156b may be maintained between an angle of more than 5° and an angle of less than 25°.

When the inclined angle α of the inclined sidewall 156 is changed, the direction of the support force Fs applied to the mass 141 by the inclined sidewall 156 is changed. Consequently, the direction and size of the force Fk formed along the inclined sidewall 156 are changed. When the inclined angle α of the inclined sidewall 156 is 0°, the centrifugal force Fw of the mass 141 is wholly offset by the support force Fs applied to the mass 141 by the inclined sidewall 156. Consequently, the force Fk formed along the inclined sidewall 156 becomes "o". When the inclined angle α of the inclined sidewall 156 is 90°, the support force Fs becomes "o" and the force Fk formed along the inclined sidewall 156 is maximized. When the inclined angle α of the inclined sidewall 156 is increased between o° and 90°, the force Fk formed along the inclined sidewall 156 is increased. When the inclined angle α of the inclined sidewall 156 is decreased between o° and 90°, the force Fk formed along the inclined sidewall 156 is decreased. In addition, the RPM of the drum 30 is proportional to the square of the centrifugal force Fw. Accordingly, when the RPM of the drum 30 is increased, the force Fk formed along the inclined sidewall 156 is increased, whereas, when the RPM of the drum 30 is decreased, the force Fk formed along the inclined sidewall 156 is decreased.

The magnetic force Fm generated by the magnet 160 restricts the mass 141 by offsetting the force Fk formed along the inclined sidewall 156. Accordingly, as the inclined angle α of the inclined sidewall 156 is gradually increased, the Fk formed along the inclined sidewall 156 is gradually increased. Consequently, the mass 141 is decoupled from the groove 150 against the restrictive force by the magnetic force Fm at a relatively low RPM of the drum 30. On the contrary, as the inclined angle α of the inclined sidewall 156 is gradually decreased, the Fk formed along the inclined sidewall 156 is gradually decreased. Therefore, in order for the mass 141 to be decoupled from the groove 150 against the restrictive force by the magnetic force Fm, there is a need for a relatively high RPM of the drum 30.

As described above, the inclined angle of the first section 156a is greater than the second section 156b. Therefore, among the masses 141 received in the groove 150, the masses 141, which are received on the first inclined surfaces 154a of the groove 150 and supported by the first sections 156a, are decoupled from the groove 150 at a relatively low RPM of the drum 30, compared with the masses 141 which are received on the flat surface 154c of the groove 150 and supported by the second section 156b. This means that the masses 141 received in the groove 150 are decoupled from the groove 150 in the order of from the masses 141 disposed at both ends of the groove 150 to the masses 141 disposed at the center of the groove 150 during acceleration of the drum 30. Accordingly, it may be possible to prevent a phenomenon in which the masses 141 received in the groove 150 are not smoothly decoupled from the groove 150 due to being caught in the groove 150 during acceleration of the drum 30.

As shown in FIGS. 3, 8, 9, 10, 11, and 12, the balancer housing 110 is provided, at an inner surface thereof, with a plurality of guide grooves 118a and 118b which guides movement of the plural masses 141 when the drum 30 rotates. The plural guide grooves 118a and 118b are formed along the circumferential direction of the balancer housing 110.

The plural guide grooves 118a and 118b include a first guide groove 118a and a second guide 118b groove which are disposed to face each other. The first guide groove 118a is arranged on the third inner surface 111c of the first housing 111 and the second guide groove 118b is arranged on the inner surface of the second housing 112. The first guide groove 118a is formed by recessing the third inner surface 111c and the second guide groove 118b is formed by recessing the inner surface of the second housing 112. The first guide groove 118a is connected to the groove 150.

The first guide groove 118a is disposed outside the second guide groove 118b in the radial direction of the balancer housing 110. As shown in FIG. 12, a radial distance Dg1 between a first line Lg1, which is parallel with the axis Wd of rotation of the drum 30 and passes through a center of the first guide groove 118a, and the axis Wd of rotation of the drum 30 is greater than a radial distance Dg2 between a second line Lg2, which is parallel with the axis Wd of rotation of the drum 30 and passes through a center of the second guide groove 118b, and the axis Wd of rotation of the drum 30.

When the drum 30 is accelerated and the RPM of the drum 30 is increased above a given RPM, the masses 141 received in the groove 150 are decoupled from the groove 150 and move along the second guide groove 118b. When the drum 30 is further accelerated and the centrifugal force acting on the masses 141 is further increased, the masses 141 move along the first guide groove 118a while being tilted toward the second inner surface 111b corresponding to the outer peripheral surface me of the first housing 111. That is, the second guide groove 118b serves to guide movement of the masses 141 at relatively low speed and the first guide groove 118a serves to guide movement of the masses 141 at relatively high speed.

As such, when the guide grooves 118a and 118b to guide movement of the masses 141 are formed on the inner surface of the balancer housing 110, it may be possible to reduce friction noise caused by collision between the masses 141 and the inner surface of the balancer housing 110 during rotation of the drum 30 and to prevent a phenomenon in which the inner surface of the balancer housing 110 is damaged by collision with the masses 141. In addition, the thickness of the balancer housing 110 may be reduced to the extent corresponding to a sum of depths of the first and second guide grooves 118a and 118b, thereby enabling the balancer 100 to be minimized. Moreover, a height Hg of a space between the groove 150 and the inner surface of the second housing 112 may be reduced. Accordingly, it may be possible to prevent a phenomenon in which the masses 141 are not decoupled from the groove 150 due to being caught in the groove 150 by introduction of the masses 141 more than the given number into the groove 150.

Each of the masses 141 is made of a metal material in the form of a sphere. The masses 141 are movably disposed along the annular channel 110a in the circumferential direction of the drum 30 so as to offset an unbalanced load within the drum 30 during rotation of the drum 30. When the drum 30 is rotated, the centrifugal force acts on the mass 141 in a radial outward direction of the drum 30. In this state, the mass 141 decoupled from the groove 150 performs a balancing function of the drum 30 while moving along the channel 110a.

The masses 141 are received in the first housing 111 before the first and second housings 111 and 112 are bonded to each other. The masses 141 may be received and arranged in the balancer housing 110 through the process of bonding the first and second housings 111 and 112 in a state in which the masses 141 are received in the first housing 111.

A damping fluid 170 is accommodated within the balancer housing 110 so that the mass 141 may be prevented from being suddenly moved.

The damping fluid 170 applies resistance to the mass 141 when the force acts on the mass 141, thereby preventing the mass 141 from being suddenly moved inside the channel 110a. The damping fluid 170 may be configured of oil. The damping fluid 170 partially performs a balancing function of the drum 30 together with the mass 141.

The damping fluid 170 is inserted into the first housing 111 together with the masses 141, and is then accommodated inside the balancer housing 110 through the process of bonding the first and second housings 111 and 112. However, the method of accommodating the damping fluid 170 inside the balancer housing 110 is not limited thereto. For example, after the first and second housings 111 and 112 are bonded to each other, the damping fluid 170 may also be accommodated inside the balancer housing 110 by the process of being injected into the balancer housing 110 through an injection hole (not shown) or the like formed on the first or second housing 111 or 112.

FIG. 15 is a view illustrating a structure in which the magnets are arranged on the balancer housing 10. FIG. 15 shows a state of the balancer housing when viewed from the rear.

As shown in FIG. 15, the magnets 160 are disposed at respective positions corresponding to the grooves 150. The magnets 160 include a pair of first and second magnets 160a and 160b coupled to the rear surface of the balancer housing 110.

The first and second magnets 160a and 160b may be arranged such that an angle [β formed by a first vertical line M1 which vertically connects the first magnet 160a and the center C of rotation of the drum 30 and a second vertical line M2 which vertically connects the second magnet 160b and the center C of rotation of the drum 30 is from 150° to 210°. In addition, the first and second magnets 160a and 160b may be arranged such that the angle [β forme by the first vertical line M1 and the second vertical line M2 becomes 180°. When the angle [β forme by the first vertical line M1 and the second vertical line M2 is 180°, the first and second magnets 160a and 160b are symmetrically arranged on the basis of the imaginary line Lr which passes through the center of rotation of the drum 30 and is perpendicular to the ground.

As described above, in a case in which the number of the magnets 160 is three or more in a condition that the masses 141 may be restricted by the magnets 160 because the RPM of the drum 30 does not exceed, for example, 200 RPM, when the masses 141 are caught between two adjacent magnets 160 in the process of being restricted, the masses 141 are not moved to the remaining magnets 160. Thus, the masses 141 are not evenly distributed in the balancer housing 110, thereby enabling an unbalanced load to be formed in the drum 30.

In a case in which the pair of magnets 160 are symmetrically arranged on the basis of the imaginary line Lr which passes through the center of rotation of the drum 30, when the masses 141 are wholly received in any one groove 150a, a mass 141 which is not received in any one groove 150a may be naturally received in the other groove 150b and be restricted by the magnets 160 during rotation of the drum 30. Accordingly, a phenomenon in which the masses 141 are not evenly distributed in the balancer housing 110 may not be generated.

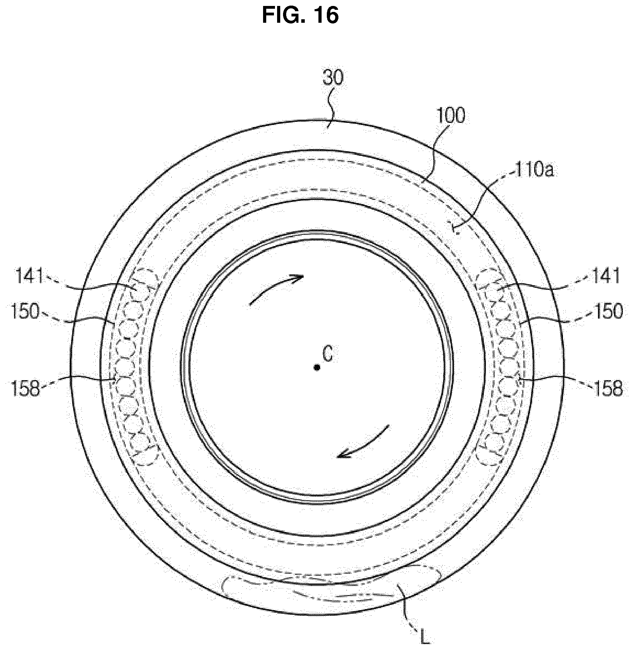

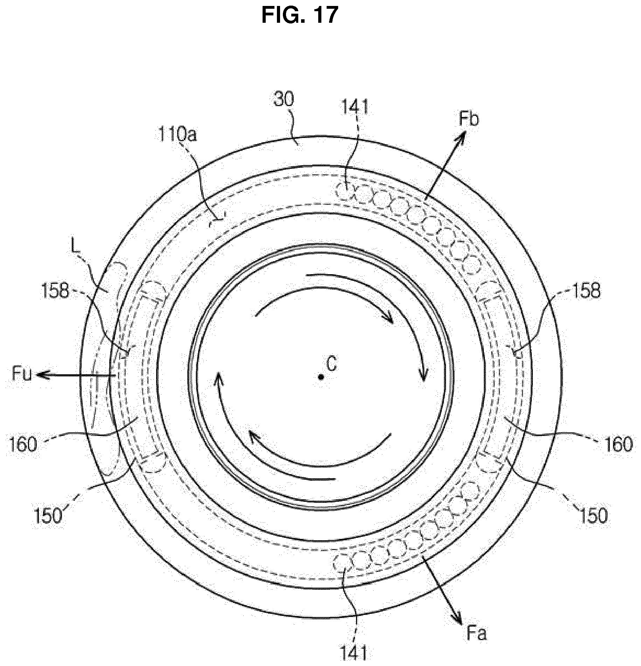

Hereinafter, a principle will be described in which the masses 141 are restricted by the groove 150 and the magnet 160 when the RPM of the drum 30 is within a specific RPM range and the masses 141 are decoupled from the groove 150 and perform a balancing function of the drum 30 when the RPM of the drum 30 departs from a specific RPM range. FIGS. 16 and 17 are views illustrating an operation principle of the balancer according to the embodiment of the present invention. The damping fluid 170 is omitted in FIGS. 16 and 17.

As shown in FIG. 16, during initial dehydration of laundry, when the RPM of the drum 30 is within a specific RPM range, the masses 141 are received in the groove 150 or the cross-section increasing portion 158 and movement of the masses 141 is restricted by the magnets 160.

Before dehydration begins, i.e., before the drum 30 begins to rotate, the masses 141 are wholly arranged at the bottom of the balancer housing 110 by weight thereof. In such a state, when dehydration begins and the drum 30 rotates, the centrifugal force acts on the masses 141 so that the masses 141 move along the channel 110a of the balancer housing 110 to be received in and seated on the groove 150 in the process of moving along the channel 110a of the balancer housing 110. The movement of the masses 141 received in and seated on the groove 150 is restricted by the magnetic force of the magnets 160 until the RPM of the drum 30 does not depart from a specific RPM range. For example, if the washing machine is designed such that the centrifugal force applied to the masses 141 by rotation of the drum 30, the force by weight of the masses 141, the magnetic force by the magnets 160, and the force supporting the masses 141 by the groove 150 balance each other out when the RPM of the drum 30 is 200 RPM, the movement of the masses 141 is restricted in a state in which the masses 141 are received in and seated on the groove 150 when the RPM of the drum 30 is within a range between 0 and 200 RPM during initial dehydration of laundry. Thus, during initial dehydration of laundry, by restricting the movement of the masses 141 when the drum 30 rotates at relatively low speed, it may be possible to prevent a phenomenon in which the masses 141 generate vibration of the drum 30 together with laundry L or the vibration generated by the laundry L is increased. In addition, it may be possible to reduce noise caused by vibration of the drum 30.

As shown in FIG. 17, when the RPM of the drum 30 departs from a specific RPM range, the masses 141 received in and restricted by the groove 150 or the cross-section increasing portion 158 are decoupled from the groove 150 or the cross-section increasing portion 158 and perform a balancing function of the drum 30 while moving along the channel 110a of the balancer housing 110.

For example, if the washing machine is designed such that the centrifugal force applied to the masses 141 by rotation of the drum 30, the force by weight of the masses 141, the magnetic force of the magnets 160, and the force supporting the masses 141 by the groove 150 balance each other out when the RPM of the drum 30 is 200 RPM, the centrifugal force applied to the masses 141 is increased when the RPM of the drum 30 exceeds 200 RPM. Therefore, the masses 141 are decoupled from the groove 150 or the cross-section increasing portion 158 and move along the channel 110a of the balancer housing 110. In such a process, the masses 141 are controlled so as to move through sliding and rolling toward a position offsetting an unbalanced load Fu caused by the drum 30 due to the bias of the laundry L, namely, in a direction opposite to the direction to which an unbalanced load Fu is applied, thereby generating forces Fa and Fb offsetting the unbalanced load Fu. As a result, it may be possible to stabilize the rotational motion of the drum 30.

As is apparent from the above description, a balancer according to embodiments of the present invention may stabilize rotational motion of a drum by efficiently offsetting an unbalanced load acting on the drum.

In addition, it may be possible to prevent generation of vibration and noise due to a mass for balancing before the drum reaches a specific rotational speed.

Although a few embodiments of the present invention have been shown and described, it would be appreciated by those skilled in the art that changes may be made in these embodiments without departing from the principles of the invention, the scope of which is defined in the claims.

## Claims

1. A balancer for a washing machine, the balancer comprising:
a balancer housing (110) for mounting to a drum (30) of the washing machine and having an annular channel (110a) therein;
a plurality of masses (141) movably disposed along the annular channel (110a); a plurality of magnets (160) on the balancer housing (110); a plurality of receiving grooves (150) configured to receive the masses (141) so as to restrict the masses (141) from moving along the annular channel (110a) when a revolution per minute value of the drum (30) is lower than a specific revolution per minute value, wherein each magnet (160) is provided at a position corresponding to a respective receiving groove (150) to restrain the masses (141) in the grooves (150) by magnetic force; **characterized in that** a first and second guide grooves (118a, 118b) are formed on an inner surface of the balancer housing (110) to guide the movement of the plurality of masses (141) in the annular channel (110a) when the drum (30) rotates, wherein the first guide groove (118a) is disposed outside the second guide groove (118b) in a radial direction of the balancer housing,
wherein the first guide groove (118a) is connected to the receiving grooves (150), so that the masses can move from a receiving groove (150) to the second guide groove (118b) when the drum (30) rotates at a revolution per minute value greater than the specific revolution per minute value, and wherein the masses (141) move along the first guide groove (118a) when the drum (30) is further accelerated and the centrifugal force acting on the masses (141) is further increased, such that the second guide groove (118b) serves to guide the movement of the masses (141) at a relatively low speed and the first guide groove (118a) serves to guide the movement of the masses (141) at a relatively high speed.

2. The balancer according to claim 1, wherein the balancer housing further comprises:
a first housing (111) opened at one side thereof; and
a second housing (112) covering the open side of the first housing to form the annular channel between the first and second housings.

3. The balancer according to claim 2, wherein the first guide groove (118a) is formed on an inner surface of the first housing (111).

4. The balancer according to claim 3, wherein the second guide groove (118b) is formed on an inner surface of the second housing (112).

5. The balancer according to claim 4, wherein a radial distance (Dg1) between a first line (Lg1), which is parallel with an axis (Wd) of rotation of the drum (30) and passes through a radial center of the first guide groove (118a), and the axis of rotation of the drum is greater than a radial distance (Dg2) between a second line (Lg2), which is parallel with the axis of rotation of the drum and passes through a radial center of the second guide groove (118b), and the axis of rotation of the drum.

6. The balancer according to claim 3, 4 or 5, wherein the first guide groove (118a) is formed along a circumferential direction of the balancer housing.

7. The balancer according to claim 4 or 5, wherein the second guide groove (118b) is formed along a circumferential direction of the balancer housing.

8. The balancer according to claim 4 or 5, wherein the first and second guide grooves (118a, 118b) are arranged to face each other.

9. The balancer according to any one of claims 3 to 8, wherein the balancer housing further comprises:
a first inner surface (111a) and a second inner surface (111b) which are arranged to face each other; and
a third inner surface (111c) connecting the first and second inner surfaces, and
wherein the first guide groove (118a) is formed on the third inner surface.

10. The balancer according to claim 4 or 5, wherein the first guide groove (118a) is disposed on an opposite side of the annular channel (110a) to the second guide groove (118b).

## Patentansprüche

1. Auswuchtvorrichtung für eine Waschmaschine, wobei die Auswuchtvorrichtung Folgendes umfasst:
ein Auswuchtvorrichtungsgehäuse (110) zum Anbringen an einer Trommel (30) der Waschmaschine, das eine ringförmige Rille (110a) darin aufweist;
eine Vielzahl von Massen (141), die beweglich entlang der ringförmigen Rille (110a) angeordnet sind;
eine Vielzahl von Magneten (160) an dem Auswuchtvorrichtungsgehäuse (110);
eine Vielzahl von Aufnahmenuten (150), die dazu konfiguriert sind, die Massen (141) aufzunehmen, um die Massen (141) daran zu hindern, sich entlang der ringförmigen Rille (110a) zu bewegen, wenn ein Drehzahlwert der Trommel (30) geringer als ein bestimmter Drehzahlwert ist, wobei jeder Magnet (160) an einer einer jeweiligen Aufnahmenut (150) entsprechenden Stelle bereitgestellt ist, um die Massen (141) durch Magnetkraft in den Nuten (150) zurückzuhalten;
**dadurch gekennzeichnet, dass** eine erste und eine zweite Führungsnut (118a, 118b) an einer inneren Oberfläche des Auswuchtvorrichtungsgehäuses (110) gebildet sind, um die Bewegung der Vielzahl von Massen (141) in der ringförmigen Rille (110a) zu führen, wenn sich die Trommel (30) dreht, wobei die erste Führungsnut (118a) in einer Radialrichtung des Auswuchtvorrichtungsgehäuses außerhalb der zweiten Führungsnut (118b) angeordnet ist,
wobei die erste Führungsnut (118a) mit den Aufnahmenuten (150) verbunden ist, sodass sich die Massen von einer Aufnahmenut (150) zu der zweiten Führungsnut (118b) bewegen können, wenn sich die Trommel (30) mit einem Drehzahlwert dreht, der größer als der bestimmte Drehzahlwert ist, und wobei sich die Massen (141) entlang der ersten Führungsnut (118a) bewegen, wenn die Trommel (30) weiter beschleunigt wird und die auf die Massen (141) wirkende Zentrifugalkraft weiter erhöht wird, sodass die zweite Führungsnut (118b) dazu dient, die Bewegung der Massen (141) mit einer relativ geringen Geschwindigkeit zu führen und die erste Führungsnut (118a) dazu dient, die Bewegung der Massen (141) mit einer relativ hohen Geschwindigkeit zu führen.

2. Auswuchtvorrichtung nach Anspruch 1, wobei das Auswuchtvorrichtungsgehäuse weiter Folgendes umfasst:
ein erstes Gehäuse (111), das an einer Seite davon geöffnet ist; und
ein zweites Gehäuse (112), das die offene Seite des ersten Gehäuses abdeckt, um die ringförmige Rille zwischen dem ersten und dem zweiten Gehäuse zu bilden.

3. Auswuchtvorrichtung nach Anspruch 2, wobei die erste Führungsnut (118a) an einer inneren Oberfläche des ersten Gehäuses (111) gebildet ist.

4. Auswuchtvorrichtung nach Anspruch 3, wobei die zweite Führungsnut (118b) an einer inneren Oberfläche des zweiten Gehäuses (112) gebildet ist.

5. Auswuchtvorrichtung nach Anspruch 4, wobei ein radialer Abstand (Dg1) zwischen einer ersten Linie (Lg1), die zu einer Drehachse (Wd) der Trommel (30) parallel ist und durch eine radiale Mitte der ersten Führungsnut (118a) verläuft, und der Drehachse der Trommel größer als ein radialer Abstand (Dg2) zwischen einer zweiten Linie (Lg2), die parallel zur Drehachse der Trommel ist und durch eine radiale Mitte der zweiten Führungsnut (118b) verläuft, und der Drehachse der Trommel ist.

6. Auswuchtvorrichtung nach Anspruch 3, 4 oder 5, wobei die erste Führungsnut (118a) entlang einer Umfangsrichtung des Auswuchtvorrichtungsgehäuses gebildet ist.

7. Auswuchtvorrichtung nach Anspruch 4 oder 5, wobei die zweite Führungsnut (118b) entlang einer Umfangsrichtung des Auswuchtvorrichtungsgehäuses gebildet ist.

8. Auswuchtvorrichtung nach Anspruch 4 oder 5, wobei die erste und die zweite Führungsnut (118a, 118b) dazu eingerichtet sind, einander zugewandt zu sein.

9. Auswuchtvorrichtung nach einem der Ansprüche 3 bis 8, wobei das Auswuchtvorrichtungsgehäuse weiter Folgendes umfasst:
eine erste innere Oberfläche (111a) und eine zweite innere Oberfläche (111b), die dazu eingerichtet sind, einander zugewandt zu sein; und
eine dritte innere Oberfläche (111c), die die erste und die zweite innere Oberfläche verbindet, und
wobei die erste Führungsnut (118a) an der dritten inneren Oberfläche gebildet ist.

10. Auswuchtvorrichtung nach Anspruch 4 oder 5, wobei die erste Führungsnut (118a) auf einer der zweiten Führungsnut (118b) gegenüberliegenden Seite der ringförmigen Rille (110a) angeordnet ist.

## Revendications

1. Compensateur d'équilibrage pour une machine à laver, le compensateur d'équilibrage comportant :
un logement de compensateur d'équilibrage (110) à des fins de montage sur un tambour (30) de la machine à laver et ayant un canal annulaire (110a) dans celui-ci ;
une pluralité de masses (141) disposées de manière mobile le long du canal annulaire (110a) ;
une pluralité d'aimants (160) sur le logement de compensateur d'équilibrage (110) ;
une pluralité de rainures de réception (150) configurées pour recevoir les masses (141) de manière à limiter les masses (141) en termes de mouvement le long du canal annulaire (110a) quand une valeur de révolutions par minute du tambour (30) est inférieure à une valeur de révolutions par minute spécifique, dans lequel chaque aimant (160) est mis en oeuvre au niveau d'une position correspondant à une rainure de réception respective (150) pour retenir les masses (141) dans les rainures (150) par une force magnétique ;
**caractérisé en ce que** des première et deuxième rainures de guidage (118a, 118b) sont formées sur une surface intérieure du logement de compensateur d'équilibrage (110) à des fins de guidage du mouvement de la pluralité de masses (141) dans le canal annulaire (110a) quand le tambour (30) tourne, dans lequel la première rainure de guidage (118a) est disposée à l'extérieur de la deuxième rainure de guidage (118b) dans une direction radiale du logement de compensateur d'équilibrage,
dans lequel la première rainure de guidage (118a) est reliée aux rainures de réception (150), de telle sorte que les masses peuvent se déplacer depuis une rainure de réception (150) jusqu'à la deuxième rainure de guidage (118b) quand le tambour (30) tourne à une valeur de révolutions par minute supérieure à la valeur de révolutions par minute spécifique, et dans lequel les masses (141) se déplacent le long de la première rainure de guidage (118a) quand le tambour (30) est par ailleurs accéléré et la force centrifuge agissant sur les masses (141) est par ailleurs augmentée, de telle sorte que la deuxième rainure de guidage (118b) sert à guider le mouvement des masses (141) à une vitesse relativement faible et la première rainure de guidage (118a) sert à guider le mouvement des masses (141) à une vitesse relativement élevée.

2. Compensateur d'équilibrage selon la revendication 1, dans lequel le logement de compensateur d'équilibrage comporte par ailleurs :
un premier logement (111) ouvert au niveau d'un côté de celui-ci ; et
un deuxième logement (112) couvrant le côté ouvert du premier logement pour former le canal annulaire entre les premier et deuxième logements.

3. Compensateur d'équilibrage selon la revendication 2, dans lequel la première rainure de guidage (118a) est formée sur une surface intérieure du premier logement (111).

4. Compensateur d'équilibrage selon la revendication 3, dans lequel la deuxième rainure de guidage (118b) est formée sur une surface intérieure du deuxième logement (112).

5. Compensateur d'équilibrage selon la revendication 4, dans lequel une distance radiale (Dg1) entre une première ligne (Lg1), qui est parallèle par rapport à un axe (Wd) de rotation du tambour (30) et qui passe au travers d'un centre radial de la première rainure de guidage (118a), et l'axe de rotation du tambour est supérieure par rapport à une distance radiale (Dg2) entre une deuxième ligne (Lg2), qui est parallèle par rapport à l'axe de rotation du tambour et qui passe au travers d'un centre radial de la deuxième rainure de guidage (118b), et l'axe de rotation du tambour.

6. Compensateur d'équilibrage selon la revendication 3, la revendication 4 ou la revendication 5, dans lequel la première rainure de guidage (118a) est formée le long d'une direction circonférentielle du logement de compensateur d'équilibrage.

7. Compensateur d'équilibrage selon la revendication 4 ou la revendication 5, dans lequel la deuxième rainure de guidage (118b) est formée le long d'une direction circonférentielle du logement de compensateur d'équilibrage.

8. Compensateur d'équilibrage selon la revendication 4 ou la revendication 5, dans lequel les première et deuxième rainures de guidage (118a, 118b) sont agencées pour être orientées l'une vers l'autre.

9. Compensateur d'équilibrage selon l'une quelconque des revendications 3 à 8, dans lequel le logement de compensateur d'équilibrage comporte par ailleurs :
une première surface intérieure (111a) et une deuxième surface intérieure (111b) qui sont agencées pour être orientées l'une vers l'autre ; et
une troisième surface intérieure (111c) reliant les première et deuxième surfaces intérieures, et
dans lequel la première rainure de guidage (118a) est formée sur la troisième surface intérieure.

10. Compensateur d'équilibrage selon la revendication 4 ou la revendication 5, dans lequel la première rainure de guidage (118a) est disposée sur un côté opposé du canal annulaire (110a) par rapport à la deuxième rainure de guidage (118b).
